# EUROPÄISCHE PATENTSCHRIFT

(11) **EP 1 075 923 B1**
(45) Veröffentlichungstag und Bekanntmachung des Hinweises auf die Patenterteilung: **11.09.2002**
(21) Anmeldenummer: 00113432.9
(22) Anmeldetag: 24.06.2000
(51) Int. Cl.: B29C 51/44

(54) **Verfahren zum Stapeln von Behältern aus thermoplastischem Kunststoff und Vorrichtung zur Durchführung des Verfahrens**
Method and device for piling containers made of themoplastic material
Procédé et dispositif pour empiler des conteneurs en matière thermoplastique

(30) Priorität: 16.07.1999 DE 19933354
(43) Veröffentlichungstag der Anmeldung: 14.02.2001
(73) Patentinhaber: Adolf Illig Maschinenbau GmbH & Co. KG, 74081 Heilbronn (DE)
(72) Erfinder: Schlimgen, Stefan, 74080 Heilbronn-Böckingen (DE); Wozny, Michael, 74076 Heilbronn (DE)

(56) Entgegenhaltungen:
- DE-A- 3 202 770
- DE-U- 29 608 477
- US-A- 5 636 722

## Beschreibung

Die Erfindung betrifft ein Verfahren zum Stapeln von Behältern gemäß dem Oberbegriff des Patentanspruchs, sowie eine Vorrichtung zum stapeln von Behältern gemäßs dem Oberbegriff des Patentanspruchs 7.

Aus der DE 32 02 770 A1 ist ein Verfahren zum Stapeln von Kunststoffbehältern bekannt, bei dem diese mittels eines Schiebers abwechselnd zu zwei ortsfest angeordneten Stapelmagazinen geführt und in diese eingestapelt werden. Die Entnahme der sich bildenden Stapel aus den Stapelmagazinen bei einer bestimmten vorgegebenen Stückzahl erfolgt bekannterweise zwischen zwei Takten des Formwerkzeuges durch eine aufwendige Übergabeeinrichtung, wie sie in der US 4 132 319 dargestellt ist. Die Stapel können mit dieser Übergabeeinrichtung nur alle gemeinsam auf eine Platte oder ein Transportband aufgesetzt werden. Mit dieser Übergabeeinrichtung ist es folglich nicht möglich, eine Hintereinanderführung dieser Stapel herbeizuführen, wie es zum Nachbearbeiten - z.B. zum Bördeln oder zum Verpacken in Beuteln - erforderlich ist. Weitere aufwendige Einrichtungen oder manuelle Eingriffe sind nötig, um diese Stapel in horizontale Lage zu überführen. Dies ist störungsanfällig, weil Stapel zum Auseinanderdriften neigen. Ein weiterer Nachteil dieses Stapelverfahrens besteht darin, dass die Behälter über zwei Stapelkanten gedrückt werden müssen, was immer mit einer Deformationsgefahr verbunden ist. Beim Zurückkehren der Übergabeeinrichtung muss diese über die inzwischen gebildeten Stapel geschoben werden, was zu dieser Deformation führen kann, weil jeder Behälterrand über diese Rückhalteorgane geführt werden muss. Oder es sind aufwendige, förmatbedingte Maßnahmen erforderlich, um die Rückhalteorgane der Übergabeeinrichtung verschiebbar zu gestalten, was an jeder Stange an mehreren Stellen erforderlich ist. Eine Handhabung der Stapel auf diese Weise ist teuer, störungsanfällig und birgt eine Deformationsgefahr für die Behälterränder. Die DE 32 02 770 A1 bildet den Oberbegriff der Ansprüche 1 und 7.

Aus der DE 26 07 371 B2 ist ein Verfahren zum Stapeln von Teilen bekannt, bei dem ein horizontal verschiebbares doppeltes Formwerkzeugunterteil mit den formgebenden Teilen eingesetzt wird. Diese beiden Formwerkzeugunterteile kommen abwechselnd in der einzigen Formstation zu liegen und dann nach einer Verschiebung links bzw. rechts in einer Entnahmestation. Dort werden die Behälter von je einer höhenverschiebbaren Entnahmeeinrichtung; entnommen und nach deren seitlicher Verschiebung in vertikal angeordnete Stapelmagazine übergeben. Über das weitere Verfahren bezüglich Handhabung der sich bildenden Stapel ist nichts ausgesagt.
Nachteilig bei diesem Verfahren ist die Notwendigkeit des Einsatzes von zwei teueren Formwerkzeugunterteilen, die die formenden und stanzenden Teile aufweisen und exakt gleich in den Dimensionierungen und in der Temperaturführung sein müssen, da sie mit einer ortsfesten Matrize bei engem zulässigem Schneidspalt zusammenarbeiten müssen. Dies ist teuer und in hohem Maße störungsanfällig. Schon geringe Temperaturunterschiede führen durch die dann unterschiedliche Wärmeausdehnung zur Zerstörung der stanzenden Teile. Zusätzlich liegen dieselben Nachteile vor wie beim Verfahren gemäß DE 32 02 770 A1.

Aus der DE 296 08 477 U ist es bekannt, die Behälter in ein Stapelmagazin zu übergeben und dieses nach Erreichen einer vorgegebenen Stückzahl zu einer Entnahmestation zu führen. Dort werden die Stapel reihenweise ausgeschoben und über ein Querförderband hintereinander geführt. Während der Entnahme der Stapel bilden sich in einer Stapelplatte neue Stapel. Auch hier müssen die Behälterränder über zwei Rückhalteeinrichtungen mit der Gefahr der Deformation geführt werden. Es ist schwierig, eine genaue Anzahl der Behälter pro Stapel im Stapelmagazin zu erfassen, weil nicht direkt in das Stapelmagazin gestapelt wird und sich immer eine bestimmte Anzahl in der Stapelplatte befindet, folglich noch nicht vom Stapelmagazin gehalten ist. Diese Anzahl ist abhängig vom Stapelabstand, der geringfügig schwanken kann. Beim Anfahren der Vorrichtung muss diese Anzahl ermittelt und von der Steuerung eingerechnet werden. Dies führt auch zu Problemen bei Betriebsunterbrechungen.

Aus der US-A-5 636 722 ist eine Puffereinrichtung bekannt, die zur Pufferung von Teilen wie Schokoriegeln zwischen einer Fertigungseinrichtung und einer Verpackungseinrichtung dient, um einen Stillstand einer der Einrichtungen zu überbrücken. Teile werden reihenweise in eine große Anzahl von Aufnahmen für mehrere Reihen geschoben, diese Aufnahmen werden zu einer Entnahmestation geführt und dort werden die Teile wieder reihenweise ausgeschoben. Eingangszustand und Ausgangszustand der Teile sind gleich. Eine Stapelung von Teilen und eine Handhabung von Stapeln erfolgen nicht. Folglich gibt diese Veröffentlichung dem Fachmann keine Anregungen zum Lösen von Problemen beim Stapeln von Kunststoffbehäftern ( Deformation eines Behälterrandes, Stückzahl pro Stapel, Hintereinanderführen von - auch mehrreihig - gebildeten Stapeln, Störungen bei der Handhabung der Stapel durch Auseinanderdriften, Kosten für formatabhängige Teile ).

Der Erfindung liegt die Aufgabe zugrunde, Behälterstapel mit definierter Anzahl zu bilden und diese auf einfache kostengünstige Weise ohne Gefahr der Deformation der Behälter und ohne aufwendiges Handhaben der Stapel Nachfolgeeinrichtungen hintereinanderliegend zuzuführen.

Nach der Erfindung wird diese Aufgabe durch das Verfahren gemäß Patentanspruch 1 und durch die Vorrichtung gemäß Patentanspruch 7 gelöst. Zweck mäßige Weiter bildungen der Erfindung sind begenstand des betreffenden abhängigen Ansprüche.

Das Verfahren ist anhand der schematischen Zeichnungen der Vorrichtung näher beschrieben. Es zeigt:
- Figur 1: einen Längsschnitt durch das Formwerkzeug in der Abgabestellung
- Figur 2: eine Draufsicht auf die Vorrichtung
- Figur 3: eine Ansicht in Richtung X in Figur 2

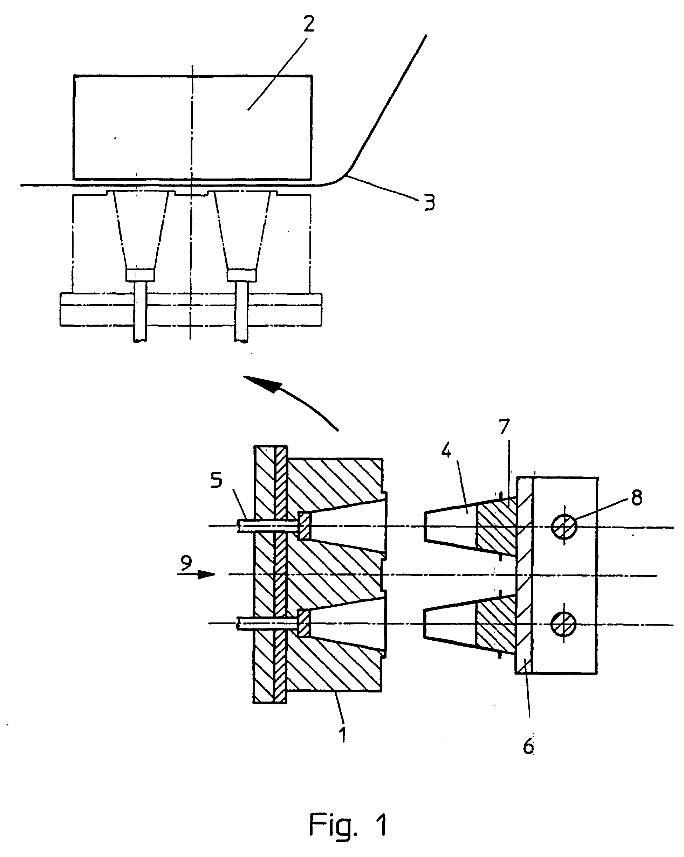

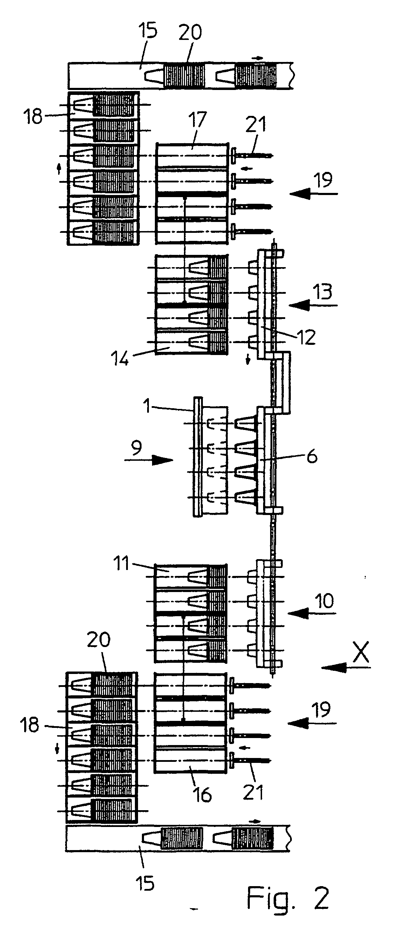

In Figur 1 ist ein Unterteil 1 eines kombinierten Form-/Stanzwerkzeuges dargestellt, das aus der strichpunktiert dargestellten Formstellung, in der im Zusammenwirken mit einem Oberteil 2 aus einer Folienbahn 3 Behälter 4 geformt und ausgestanzt werden, in eine Ausgabestellung 9 geschwenkt werden kann. Mittels Auswerfem 5 werden die Behälter 4 aus dem in Ausgabestellung 9 stehenden Unterteil 1 ausgestoßen und von einer Halteplatte 6 aufgenommen. Dies erfolgt mittels Unterdruck und/oder durch zusätzliche Aufnahmedome 7 ggf. formschlüssig. Die Halteplatte 6 ist an Führungen 8 rechtwinklig zur Ausschieberichtung der Behälter 4 verschiebbar von der Ausgabestellung 9 in eine seitliche Stapelstation 10 (siehe Figur 2), in der ein Stapelmagazin 11 angeordnet ist. In dieses werden die Behälter 4 eingestapelt, wofür eine Relativbewegung zwischen Stapelmagazin 11 und Halteplatte 6 auf nicht dargestellte Weise erzeugt wird. Während sich die Halteplatte 6 in dieser Stapelstellung 10 befindet, steht eine zweite Halteplatte 12 vor dem Unterteil 1 in der Ausgabestellung 9, um die während des nächsten Taktes ausgestoßenen Behälter 4 aufzunehmen und in eine Stapelstation 13 zu einem zweiten Stapelmagazin 14 auf der gegenüberliegenden Seite zu führen. Da die beiden Halteplatten 6, 12 synchrone Bewegungen ausführen, können sie miteinander verbunden sein und über einen gemeinsamen Antrieb bewegt werden. Es sind aber auch zwei getrennt Antriebe verwendbar was den Vorteil bietet, die Frontseite des Unterteils frei zugänglich zu machen.

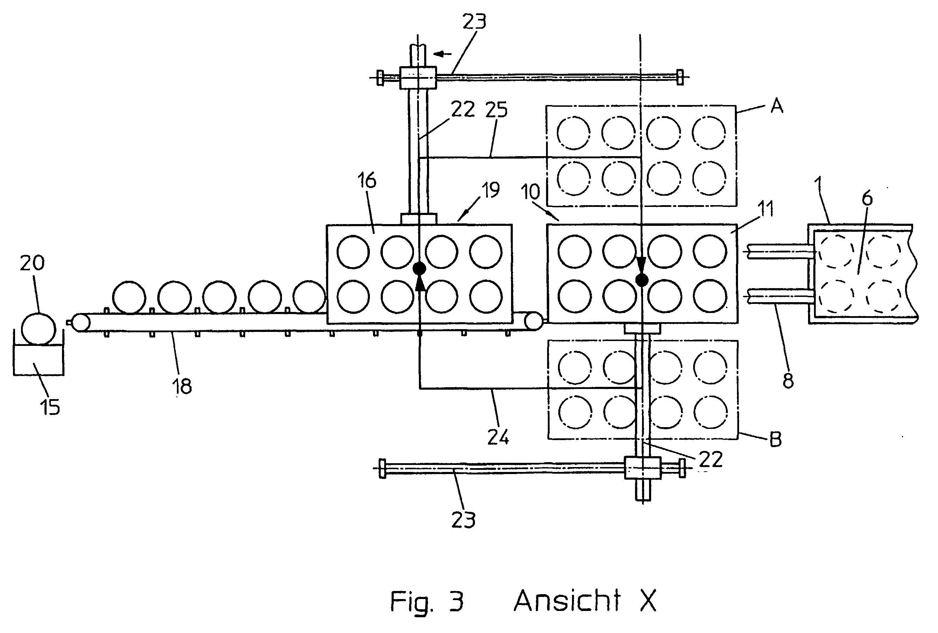

Dieses Stapelprinzip ist bei einer hohen Taktzahl des Formwerkzeuges anwendbar, da die doppelte Taktzeit verbleibt, um die Behälter 4 in die seitlichen Stapelmagazine 11, 14 zu überführen. Da die sich in den Stapelmagazinen 11, 14 bildenden Stapel 20 jedoch aus diesen bei einer vorgegebenen Anzahl von Behältern entfernt und anschließend ggf. auf ein einziges Förderband 15 hintereinander geführt werden müssen, benötigt dieses Räumen mehr Zeit als zwischen zwei Takten zur Verfügung steht. Vor allem bei mehrreihiger Fahrweise des Formwerkzeuges müssen die übereinanderliegenden Stapelreihen reihenweise aus den Stapelmagazinen 11, 14 heraus auf ein Querförderband 18 geschoben werden. Um dies zu erreichen, ist jedem Stapelmagazin 11, 14 ein benachbartes Stapelmagazin 16, 17 zugeordnet, mit dem es gewechselt werden kann. Einen vorteilhaften Aufbau zeigt Figur 3.

Die Stapelmagazine 11, 14, 16, 17 sind vertikal und horizontal verschiebbar mittels nicht dargestellter Antriebe ausgebildet, dabei geführt an Stangen 22, 23. Zum Wechseln wird das leere Stapelmagazin 16 in eine Stellung A oberhalb des Stapelmagazines 11 gebracht (siehe Figur 3). Zwischen zwei Stapeltakten wird das Stapelmagazin 11 abgesenkt (Lage B), das Stapelmagazin 16 an seine Stelle gebracht. Während dieses befüllt wird, verfährt das Stapelmagazin 11 horizontal und dann wieder aufwärts in die Ausschiebestation 19, bis die oberste Stapelreihe auf Höhe einer Transporteinrichtung, die in Form eines Querförderbandes 18 dargestellt ist, zu liegen kommt. Eine Ausschiebeeinrichtung 21 überführt eine Reihe von Stapeln 20 auf das Querförderband 18. Dieses übergibt diese Stapel 20 taktweise auf ein Förderband 15 oder führt sie auf andere Weise einer Nachbearbeitungsstation (z. B. zum Bördeln, Sterilisieren, Verpacken) zu. Ist das Querförderband 18 wieder frei, fährt das Stapelmagazin 11 einen Schritt nach oben ( Lage siehe Figur 3 ), so dass die zweite Reihe von Stapeln 20 auf das Querförderband 18 ausgeschoben und in gleicher Weise weitertransportiert werden kann. Der Bewegungsablauf der Stapelmagazine 11, 16 ist durch Pfeile 24, 25 dargestellt.

Anstelle des Querförderbandes 18 kann ein Schiebetisch eingesetzt sein, der Aufnahmen für die einzelnen Stapel aufweist und intermittierend zu einer Abgabestelle geführt wird. Diese Lösung erlaubt eine raschere Umrüstung auf ein anderes Behälterformat. Sind alle Stapel 20 entfernt, wird das Stapelmagazin 11 zurück bis unterhalb des sich in der Stapelstation 10 befindlichen Stapelmagazines 16 geführt (Stellung B). Der Austausch erfolgt durch Anheben beider Stapelmagazine 11, 16, so dass dann anschließend wieder in das Stapelmagazin 11 gestapelt wird. Das Stapelmagazin 16 wird zur Ausschiebestation 19 geführt und dort reihenweise abgesenkt, so dass zuerst dessen unterste Reihe von Stapeln 20, dann die zweite Reihe, ggf. eine dritte Reihe auf das Querförderband 18 übergeben werden kann.

Der Wechsel der Stapelmagazine 14, 17 findet in gleicher Weise statt.

Das Führen der jeweils paarweisen Stapelmagazine 11, 16 bzw. 14, 17 zu einer gemeinsamen Ausschiebestation 19 hat den Vorteil, dass zwei Stapelmagazine nur eine Ausschiebestation 19 benötigen und damit auch nur eine Ausschiebeeinrichtung 21 und so die Stapel 20 leichter zusammengeführt werden können. Wenn man zwei Stapelmagazine verbindet und durch eine gemeinsame Verschiebung abwechselnd eines davon in eine Stapelstation 10 führt gibt es zwei Ausschiebestationen.

Durch diese Verfahrensweise ist es möglich, alle Behälter 4 direkt ohne weitere Übergabe in Stapelmagazine 11, 14, 16, 17 einzustapeln und abgezählte Stapel 20 einfach herzustellen. Eine Umstellung der Vorrichtung auf eine andere Behälterform erfolgt auf einfache Weise durch einen Wechsel der Stapelmagazine 11, 14, 16, 17 und eine Programmierung des Hubes, der zum Räumen der einzelnen Stapelreihen erforderlich ist. Dies ist rasch und ohne Aufwand möglich.

## Patentansprüche

1. Verfahren zum Stapeln von Behältern (4), die in einem Formwerkzeug (1,2) aus einer Folienbahn (3) aus thermoplastischem Kunststoff geformt, ausgestanzt und abwechselnd mittels einer Übergabeeinrichtung, bestehend aus zwei Halteplatten (6,12), zu zwei Stapelstationen (10, 13) mit Stapelmagazinen (11,14,16,17) geführt werden und zum Überführen der Stapel (20) auf eine Transporteinrichtung (18) zur Weitergabe an eine Nachfolgeeinrichtung, **dadurch gekennzeichnet, dass** die Behälter (4) in jeder Stapelstation (10, 13) abwechselnd in zwei, zwischen der Stapelstation (10, 13) und einer Ausschiebestation (19) verschiebbare Stapelmagazine (11,14,16,17) eingestapelt werden, wobei der Wechsel der Stapelmagazine (11,14,16,17) bei Erreichen der vorgegebenen Anzahl von Behältern (4) pro Stapel (20) während eines Taktes des Formwerkzeuges (1,2) erfolgt.

2. Verfahren nach Anspruch 1 **dadurch gekennzeichnet, dass** das Wechseln der Stapelmagazine (11,14 bzw. 16,17) durch einen getrennten Bewegungsablauf der einzelnen Stapelmagazine (11,14 bzw. 16,17) erfolgt.

3. Verfahren nach Anspruch 2 **dadurch gekennzeichnet, dass** das sich in der Ausschiebestation (19) befindliche Stapelmagazin (16, 17) nach dem Leeren oberhalb bzw. unterhalb des sich in der Stapelstation (10) befindlichen Stapelmagazins (11, 14) positioniert wird.

4. Verfahren nach einem der Ansprüche 1 bis 3 **dadurch gekennzeichnet, dass** das sich in der Ausschiebestation (19) befindliche Stapelmagazin (11, 14, 16, 17) reihenweise entleert wird.

5. Verfahren nach einem der Ansprüche 1 bis 4 **dadurch gekennzeichnet, dass** die Stapel (20) auf ein Querförderband (18) übergeben und von diesem auf ein Längsförderband (15) geführt werden.

6. Verfahren nach einem der Ansprüche 1 bis 4 **dadurch gekennzeichnet, dass** die Stapel (20) auf einen Schiebetisch übergeben und von diesem zu einem Längsförderband (15) geführt werden.

7. Vorrichtung zum Stapeln von Behältern (4), die in einem Formwerkzeug (1,2) aus einer Folienbahn (3) aus thermoplastischem Kunststoff geformt und ausgestanzt werden, mit einer Übergabeeinrichtung, bestehend aus zwei Halteplatten (6,12), zum Erfassen der aus dem Formwerkzeug (1, 2) ausgestoßenen Behälter (4), mit zwei Stapelstationen (10, 13) mit Stapelmagazinen (11,14,16,17) zur Aufnahme der Behälter (4) und mit einer Ausschiebeeinrichtung (19) zum Überführen der Stapel (20) aus den Stapelmagazinen (11,14,16,17) auf eine Transporteinrichtung (18), **gekennzeichnet durch** je zwei Stapelmagazine (11,14,16,17) in jeder Stapelstation (10, 13), die zwischen der Stapelstation (10, 13) und einer Ausschiebestation (19) zwischen zwei Takten des Formwerkzeuges (1,2) verschiebbar ausgebildet sind.

8. Vorrichtung nach Anspruch 7 **dadurch gekennzeichnet, dass** die beiden Halteplatten (6, 12) gekoppelt sind und von einem gemeinsamen Antrieb bewegt werden.

9. Vorrichtung nach Anspruch 7 **dadurch gekennzeichnet, dass** die beiden Halteplatten (6, 12) von je einem eigenen Antrieb bewegt werden.

10. Vorrichtung nach einem der Ansprüche 7 bis 9 **dadurch gekennzeichnet, dass** jedes Stapelmagazin (11, 14, 16, 17) einen Antrieb zu seiner horizontalen und vertikalen Verschiebung aufweist.

11. Vorrichtung nach einem der Ansprüche 7 bis 10 **dadurch gekennzeichnet, dass** die Transporteinrichtung als Querförderband (18) ausgebildet ist.

12. Vorrichtung nach einem der Ansprüche 7 bis 10 **dadurch gekennzeichnet, dass** die Transporteinrichtung als Schiebetisch ausgebildet ist.

13. Vorrichtung nach Anspruch 11 oder 12 **gekennzeichnet durch** ein Längsförderband (15) am Ende des Querförderbandes (18) bzw. des Schiebetisches.

## Claims

1. Method of stacking containers (4) which are shaped in a mould tool (1, 2) from a foil strip (3) of thermoplastic synthetic material, punched out and alternately conducted by means of a transfer device, which consists of two holding plates (6, 12), to two stacking stations (10, 13) with stack magazines (11, 14, 16, 17), and of transferring the stacks (20) to a transport device (18) for passing on to downstream equipment, **characterised in that** the containers (4) in each stacking station (10, 13) are alternately stacked in two stack magazines (11, 14, 16, 17) displaceable between the stacking station (10, 13) and an ejecting station (19), wherein the exchange of the stack magazines (11, 14, 16, 17) is carried out on reaching the predetermined number of containers (4) per stack (20) during a cycle of the mould tool (1, 2).

2. Method according to claim 1, **characterised in that** the exchange of the stack magazines (11, 14 or 16, 17) is carried out by a separate movement course of the individual stack magazines (11,14 or 16, 17).

3. Method according to claim 2, **characterised in that** the stack magazine (16, 17) disposed in the ejecting station (19) is positioned, after emptying, above or below the stack magazine (11, 14) disposed in the stacking station (10).

4. Method according to one of claims 1 to 3, **characterised in that** the stack magazine (11, 14, 16, 17) disposed in the ejecting station (19) is emptied in serial manner.

5. Method according to one of claims 1 to 4, **characterised in that** the stacks (20) are transferred to a transverse conveyor belt (18) and guided by this to a longitudinal conveyor belt (15).

6. Method according to one of claims 1 to 4, **characterised in that** the stacks (20) are transferred to a pusher table and guided by this to a longitudinal conveyor belt (15).

7. Device for stacking containers (4) which are shaped in a mould tool (1, 2) from a foil strip (3) of thermoplastic synthetic material and punched out, comprising a transfer device, which consists of two holding plates (6, 2), for picking up the containers (4) ejected from the mould tool (1, 2), two stacking stations (10, 13) with stack magazines (11, 14, 16, 17) for receiving the containers (4) and an ejector device (19) for transferring the stacks (20) from the stack magazines (11, 14, 16, 17) to a transport device (18), **characterised by** two respective stack magazines (11, 14, 16, 17) in each stacking station (10, 13), the magazines being constructed to be displaceable between the stacking station (10, 13) and an ejecting station (19) between two cycles of the mould tool (1, 2).

8. Device according to claim 7, **characterised in that** the two holding plates (6, 12) are coupled and are moved by a common drive.

9. Device according to claim 7, **characterised in that** the two holding plates (6, 12) are each moved by an own drive.

10. Device according to one of claims 7 to 9, **characterised in that** each stack magazine (11, 14, 16, 17) has a drive for the horizontal and vertical displacement thereof.

11. Device according to one of claims 7 to 10, **characterised in that** the transport device is constructed as a transverse conveyor belt (18).

12. Device according to one of claims 7 to 10, **characterised in that** the transport device is constructed as a pusher table.

13. Device according to claim 11 or 12, **characterised by** a longitudinal conveyor belt (15) at the end of the transverse conveyor belt (18) or of the pusher table.

## Revendications

1. Procédé pour empiler des récipients (4) formés à partir d'une bande (3) en matière thermoplastique à l'aide d'un outil de formage (1, 2), estampés et guidés à l'aide d'une installation de transfert formée de deux plaques de fixation (6, 12), alternativement vers deux postes d'empilage (10, 13) ayant des magasins d'empilages (11, 14, 16, 17), et pour transférer la pile (20) dans une installation de transport (18) qui la distribue à une installation en aval,
**caractérisé en ce que**
dans chaque poste d'empilage (10, 13) on empile les récipients (4) alternativement dans deux magasins d'empilage (11, 14, 16, 17) coulissants entre le poste d'empilage (10, 13) et un poste d'éjection (19), l'alternance des magasins d'empilage (11, 14, 16, 17) lorsqu'on atteint un nombre prédéterminé de récipients (4) par pile (20) se faisant pendant une cadence de l'outil de moulage (1, 2).

2. Procédé selon la revendication 14,
**caractérisé en ce que**
l'alternance du magasin d'empilage (11, 14 ou 16, 17) se fait par l'intermédiaire d'un mouvement séparé des différents magasins d'empilage (11, 14 ou 16, 17).

3. Procédé selon la revendication 2,
**caractérisé en ce que**
le magasin d'empilage (16, 17) qui se trouve dans le poste d'éjection (19), est positionné pour l'évacuation, au-dessus ou en dessous du magasin d'empilage (11, 14) qui se trouve dans le poste d'empilage (10).

4. Procédé selon l'une quelconque des revendications 1 à 3,
**caractérisé en ce que**
le magasin d'empilage (11, 14, 16, 17) qui se trouve dans le poste d'éjection (19) est vidé rangée par rangée.

5. Procédé selon l'une quelconque des revendications 1 à 4,
**caractérisé en ce que**
la pile (20) est transférée sur une bande transporteuse transversale (18) et de celle-ci, à une bande transporteuse longitudinale.

6. Procédé selon l'une quelconque des revendications 1 à 4,
**caractérisé en ce que**
les piles (20) sont transférées à une table coulissante et de là, à une bande transporteuse longitudinale.

7. Dispositif pour empiler des récipients (4) formés et estampés à partir d'une bande (3) de matière thermoplastique, comprenant une installation de transfert formée de deux plaques de fixation (6, 12) pour saisir le récipient (4) expulsé de l'outil de formage (1, 2), deux postes d'empilage (13, 10) avec des magasins d'empilage (11, 14, 16, 17) pour recevoir les récipients (4), et une installation d'éjection (19) pour transférer la pile (20) des magasins d'empilage (11, 14, 16, 17) sur une installation de transport (18),
**caractérisé par**
deux magasins d'empilage (11, 14, 16, 17) dans chaque poste d'empilage (10, 13), qui sont coulissants entre le poste d'empilage (10, 13) et un poste d'éjection (19), entre deux cadences de l'outil de formage (1, 2).

8. Dispositif selon la revendication 7,
**caractérisé en ce que**
les deux plaques de fixation (6, 12) sont couplées et sont commandées par un entraînement commun.

9. Dispositif selon la revendication 7,
**caractérisé en ce que**
les deux plaques de fixation (6, 12) sont déplacées chacune par son propre moyen d'entraînement.

10. Dispositif selon l'une quelconque des revendications 7 à 9,
**caractérisé en ce que**
chaque magasin d'empilage (11, 14, 16, 17) comporte un moyen d'entraînement pour son déplacement horizontal et pour son déplacement vertical.

11. Dispositif selon l'une quelconque des revendications 7 à 10,
**caractérisé en ce que**
l'installation de transport est une bande transporteuse transversale (18).

12. Dispositif selon l'une quelconque des revendications 7 à 10,
**caractérisé en ce que**
l'installation de transport est une table coulissante.

13. Dispositif selon l'une quelconque des revendications 11 ou 12,
**caractérisé par**
une bande transporteuse longitudinale (15) prévue à l'extrémité de la bande transporteuse transversale (18) ou de la table coulissante.
